# EUROPÄISCHE PATENTANMELDUNG

(11) **EP 4 624 412 A1**
(43) Veröffentlichungstag der Anmeldung: **01.10.2025**
(21) Anmeldenummer: 25162601.6
(22) Anmeldetag: 10.03.2025
(51) Int. Cl.: C01B 13/10

(54) **VORRICHTUNG ZUR ERZEUGUNG VON OZON AUS EINEM SAUERSTOFFHALTIGEM FLUID**

(30) Priorität: 28.03.2024 AT 502732024
(71) Anmelder: UVAUDES GmbH, 4861 Schörfling am Attersee (AT)
(72) Erfinder: Stadler, Friedrich, 4853 Steinbach am Attersee (AT); Schmid, Kurt, 4912 Neuhofen im Innkreis (AT)
(74) Vertreter: Hübscher & Partner Patentanwälte GmbH

(57) **Zusammenfassung**

Es wird eine Vorrichtung zur Erzeugung von Ozon aus einem sauerstoffhaltigen Fluid mit einem in einem Schutzrohr (2) angeordneten UV-Strahler (1) für zwei Hauptwellenlängen von 185 nm und 254 nm beschrieben, mit einem Hüllrohr (3), das das Schutzrohr (2) unter Ausbildung eines einen Strömungsweg für das sauerstoffhaltige Fluid bildenden Ringraums (4) koaxial umschließt und in Strömungsrichtung vor und hinter dem Schutzrohr (2) einerseits einen Strömungseinlass (5) und anderseits einen Strömungsauslass (6) aufweist. Um die Ozonausbeute zu steigern, wird vorgeschlagen, dass der Innendurchmesser (D) des Hüllrohrs (3) höchstens dem 1,2-Fachen des Außendurchmessers (d) des Schutzrohrs (2) entspricht und dass das Schutzrohr (2) mit einem Inertgas gefüllt ist.

## Beschreibung

Die Erfindung bezieht sich auf eine Vorrichtung zur Erzeugung von Ozon aus einem sauerstoffhaltigem Fluid mit einem in einem Schutzrohr angeordneten UV-Strahler für zwei Hauptwellenlängen von 185 nm und 254 nm, mit einem Hüllrohr, das das Schutzrohr unter Ausbildung eines einen Strömungsweg für das sauerstoffhaltige Fluid bildenden Ringraums koaxial umschließt und in Strömungsrichtung vor und hinter dem Schutzrohr einerseits einen Strömungseinlass und anderseits einen Strömungsauslass aufweist.

Im Zusammenhang mit der Desinfektion von Wasser wurden bereits Vorrichtungen dieser Art vorgeschlagen (EP1 362 828 A1), wobei eine UV-Lampe für zwei Hauptwellenlängen von 185 nm und 254 nm in ein vorzugsweise einen koaxialen Hohlzylinder bildendes Gehäuse eingesetzt wird, das von Luft durchströmt wird. Der Luftsauerstoff wird im Umströmungsbereich der UV-Lampe mit der UV-Strahlung im Wellenlängenbereich von 185 nm mit der Absicht beaufschlagt, den Luftsauerstoff zu Ozon umzuwandeln. Mithilfe einer solchen beispielsweise in einen Wasserbehälter eingesetzten Vorrichtung soll dann das Behälterwasser einerseits durch die durch das strahlungsdurchlässige Gehäuse abgestrahlte UV-Strahlung und anderseits mit dem aus dem Gehäuse austretenden Ozon behandelt werden. Nachteilig an der vorbekannten Vorrichtung ist allerdings, dass durch die Beaufschlagung der Luftströmung mit der für die Desinfektionswirkung maßgebenden UV-Strahlung der Wellenlänge von 254 nm das aus dem Luftsauerstoff gebildete Ozon weitgehend wieder abgebaut wird, sodass die Ozonausbeute gering ausfällt.

Bei einer ähnlichen Vorrichtung (EP 2 420 257 A1) wird die UV-Lampe in ein Hüllrohr eingesetzt, durch das zur Ozongewinnung Luft geleitet wird. Um die Ozonausbeute gegenüber einer Vorrichtung zu verbessern, bei der zwischen dem zylindrischen Lampenkolben mit einem Durchmesser von 28 mm und dem Hüllrohr ein Ringspalt von 2 mm vorgesehen ist, wird vorgeschlagen, den Lampenkolben zwischen den beiden Endabschnitten mit einem deutlich kleineren Durchmesser auszubilden. Damit soll einerseits der Einsatz leistungsstärkerer Elektroden in den erweiterten Endabschnitten ermöglicht und anderseits der Weg der Luftströmung für die Absorption der Photonen der UV-Strahlung im Bereich des erweiterten Ringspalts vergrößert werden, was jedoch nur bedingt zielführend ist.

Der Erfindung liegt somit die Aufgabe zugrunde, eine Vorrichtung zur Erzeugung von Ozon aus einem sauerstoffhaltigem Fluid mithilfe einer UV-Strahlung so auszugestalten, dass mit einfachen konstruktiven Maßnahmen die Ozonausbeute erheblich gesteigert werden kann.

Ausgehend von einer Vorrichtung der eingangs geschilderten Art löst die Erfindung die gestellte Aufgabe dadurch, dass der Innendurchmesser des Hüllrohrs höchstens dem 1,2-Fachen des Außendurchmessers des Schutzrohrs entspricht und dass das Schutzrohr mit einem Inertgas gefüllt ist.

Der Erfindung liegt die Erkenntnis zugrunde, dass die Dichte der emittierten Photonen mit der Entfernung von der Strahlungsquelle näherungsweise nach einer quadratischen Funktion abnimmt, was sich unmittelbar auf die Kollisionswahrscheinlichkeit zwischen Photonen und Sauerstoffmolekülen auswirkt. Durch die Photonen werden die Sauerstoffmoleküle in atomaren Sauerstoff aufgespalten, wobei diese freien Sauerstoffatome mit Sauerstoffmolekülen reagieren und Ozon bilden. Dazu kommt, dass die für die Ozonerzeugung nutzbare Strahlung mit einer Wellenlänge von 185 nm vom sauerstoffhaltigen Fluid absorbiert wird, ohne photolytisch wirksam zu werden Die Ozonbildung nimmt daher mit wachsender Entfernung von den UV-Strahlern überproportional ab. Um diese Umstände konstruktiv zu berücksichtigen, wird die lichte Weite des den Strömungsweg bildenden Ringraums zwischen dem Schutzrohr des UV-Strahlers und dem dazu konzentrischen Hüllrohr begrenzt, und zwar in Abhängigkeit vom Außendurchmesser des Schutzrohrs, der selbst von der Leistung des UV-Strahlers abhängt, sodass bei höheren Strahlungsleistungen und damit einem größeren Außendurchmesser des Schutzrohrs eine größere lichte Weite des Ringraums für den Strömungsweg des sauerstoffhaltigen Fluids für eine entsprechend nutzbare photolytische Wirksamkeit vorgegeben werden kann. Entspricht der Innendurchmesser des Hüllrohrs höchstens dem 1,2-Fachen des Außendurchmessers des Schutzrohrs, sodass die lichte Weite des Ringraums auf ein Zehntel des Außendurchmessers des Schutzrohrs begrenzt wird, können für die Bedingungen einer vorteilhaften Ozonerzeugung Konstruktionsvoraussetzungen geschaffen werden, die auch berücksichtigen, dass der einen Ozonabbau bedingende Einfluss der Strahlung mit einer Wellenlänge von 254 nm begrenzt wird. Die in Abhängigkeit vom Außendurchmesser und damit in Abhängigkeit von der Leistung des UV-Strahlers begrenzte lichte Weite des Ringraums ergibt nämlich einen Strömungsquerschnitt, der eine die Verweilzeit der Ozonmoleküle im Einflussbereich der Strahlung begrenzende Geschwindigkeit für die Fluidströmung sicherstellt, sodass der den Ozonabbau bewirkende Einfluss der Strahlung mit einer Wellenläng von 254 nm weitgehend unterdrückt werden kann.

Zur Erzeugung einer UV-Strahlung mit den geforderten Wellenlängen ist eine gleichbleibende Plasmatemperatur erforderlich. Damit die photolytische Ozonerzeugung weitgehend unbeeinflusst von der fühlbaren Wärme des sauerstoffhaltigen Fluids auch über längere Zeiträume zuverlässig durchgeführt werden kann, wird das die UV-Lampe umschließende Schutzrohr mit einem Inertgas, vorzugsweise Stickstoff, gefüllt. Das Inertgas wirkt als Wärmedämmung, sodass der UV-Strahler unter gleichbleibenden Temperaturbedingungen betrieben werden kann. Außerdem verhindert die Inertgasfüllung eine sonst unter Umständen mögliche Ozonbildung innerhalb des Schutzrohrs. Stickstoff als Inertgas hat den Vorteil seiner einfachen Verfügbarkeit und seiner Durchlässigkeit für die UV-Strahlung mit einer Wellenlänge von 185 nm und 254 nm.

Da die Sauerstoffmoleküle insbesondere in einem oberflächennahen Bereich des Schutzrohrs des UV-Strahlers aufgespalten werden, ergeben sich besonders vorteilhafte Bedingungen für die Ozonaufbereitung, wenn der Innendurchmesser des Hüllrohrs höchstens dem 1,1-Fachen des Außendurchmessers des Schutzrohrs entspricht.

Wird das Hüllrohr so ausgebildet, dass es die Strahlung der Wellenlänge von 185 nm absorbiert, wird sichergestellt, dass außerhalb des Hüllrohrs keine Umwandlung von Sauerstoffmolekülen in Ozon stattfinden kann. In einem solchen Fall kann die ausschließliche Wirkung der vom Hüllrohr abgestrahlten Strahlung im Wellenbereich von 254 nm genützt werden.

Um günstige Strömungsverhältnisse zu schaffen und eine gleichmäßige Fluidströmung durch den Ringraum zwischen dem Schutzrohr des UV-Strahlers und dem Hüllrohr zu erreichen, kann das Schutzrohr auf der Seite des Strömungseinlasses einen durch radiale Zentrieransätze zentrisch im Hüllrohr gehaltenen Anströmkopf aufweisen. Der Anströmkopf sichert eine strömungsgünstige Aufteilung der Fluidströmung auf den Ringraum, wobei durch die radialen Zentrieransätze die zentrische Halterung des Anströmkopfs gegenüber dem Hüllrohr gegeben ist, ohne bei einer entsprechenden Ausbildung und Verteilung das Einströmen des Fluids in den Ringraum nachhaltig zu beeinträchtigen.

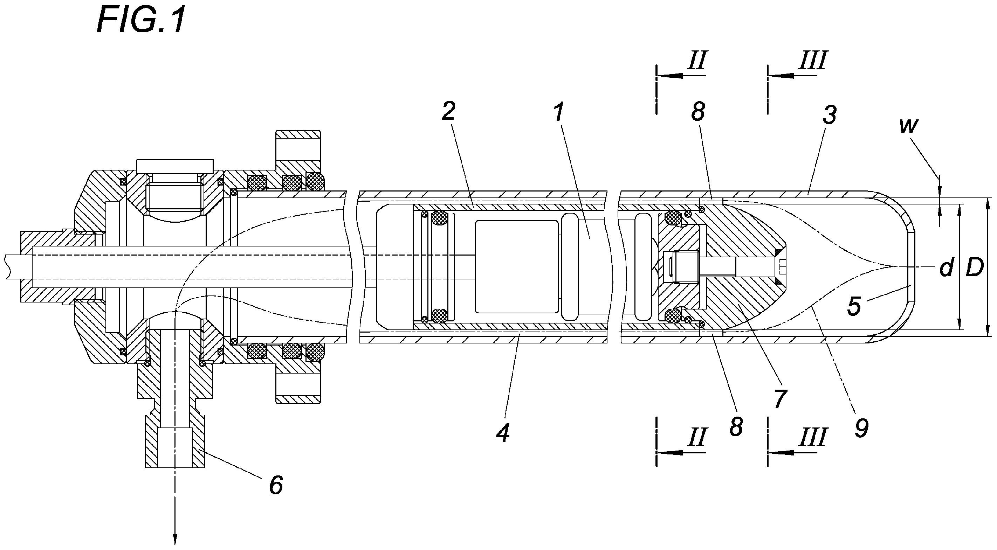

In der Zeichnung ist der Erfindungsgegenstand beispielsweise dargestellt. Es zeigen
- Fig. 1: eine erfindungsgemäße Vorrichtung in einem schematischen Längsschnitt,

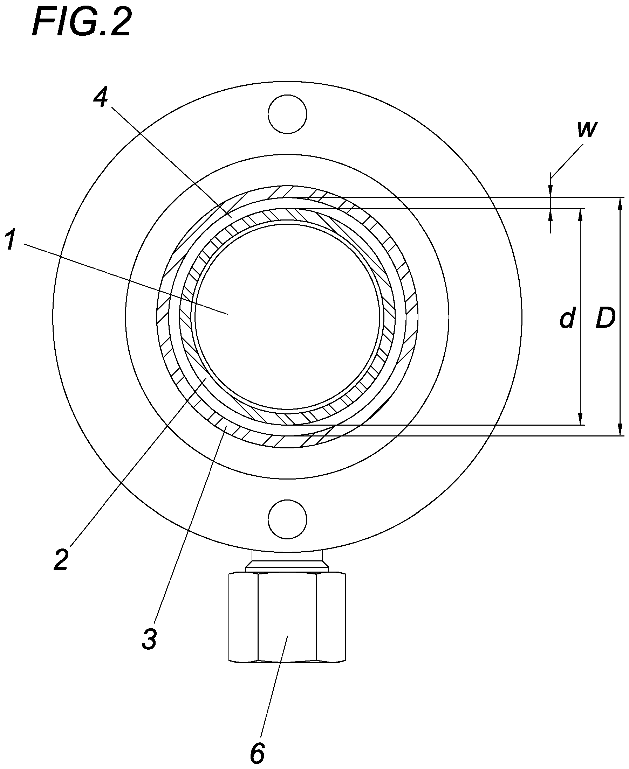

- Fig. 2: einen Schnitt entlang der Linie II - II der Fig. 1 in einem größeren Maßstab und

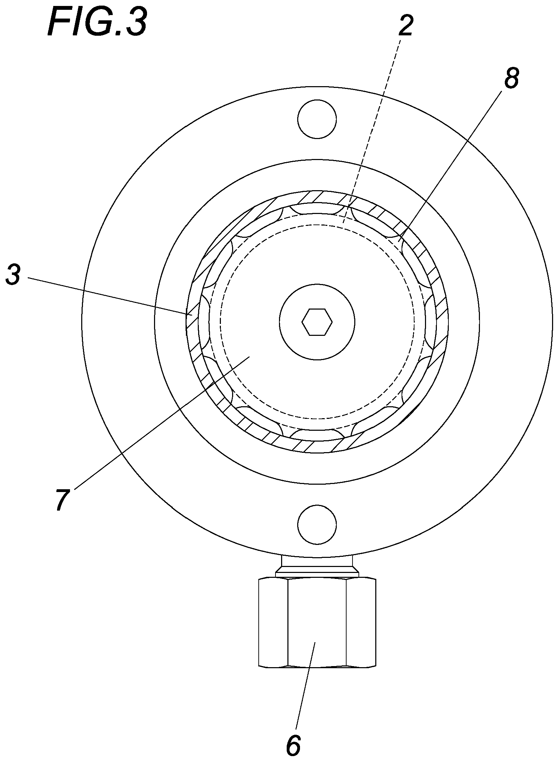

- Fig.3: einen Schnitt entlang der Linie III - III der Fig. 1 in einem größeren Maßstab.

Eine erfindungsgemäße Vorrichtung umfasst einen für einen Wellenlängenbereich von 185 nm und 254 nm ausgelegten UV-Strahler 1 in einem mit einem Inertgas, insbesondere Stickstoff, gefüllten Schutzrohr 2, das in einem koaxialen Hüllrohr 3 angeordnet ist. Das Schutzrohr 2 und das Hüllrohr 3 sind in üblicher Weise aus Quarzglas gefertigt. Das Hüllrohr 3, das das Schutzrohr 2 unter Ausbildung eines Ringraums 4 umschließt, wird von einem sauerstoffhaltigen Fluid, beispielsweise Luft, durchströmt, das durch einen Strömungseinlass 5 in das Hüllrohr 3 eingeleitet und nach einem Durchströmen des Ringraums 4 durch einen Strömungsauslass 6 abgezogen wird.

Entlang des Strömungswegs durch den Ringraum 4 wird das sauerstoffhaltige Fluid mit der UV-Strahlung des UV-Strahlers 1 beaufschlagt, wobei die Strahlung im Wellenlängenbereich von 185 nm eine Aufspaltung von Sauerstoffmolekülen in atomaren Sauerstoff bewirkt, der sich mit Sauerstoffmolekülen zu Ozon verbindet. Diese Wirkung ist allerdings auf eine das Schutzrohr 2 umspülende, oberflächennahe Fluidschicht beschränkt, sodass die lichte Weite w des Ringraums 4 entsprechend angepasst werden soll. Um diesen Forderungen Rechnung zu tragen, darf der Innendurchmesser D des Hüllrohrs 3 das 1,2-Fache des Außendurchmessers d des Schutzrohrs 2 nicht übersteigen. Unter diesen Konstruktionsvoraussetzungen kann nicht nur sichergestellt werden, dass das Fluid über die gesamte lichte Weite w des Ringraums 4 mit einer Wellenlänge von 185 nm für eine effiziente Ozonerzeugung ausreichend beaufschlagt wird, sondern auch der den Ozonabbau bewirkende Einfluss der Strahlung im Wellenlängenbereich von 254 nm auf ein erträgliches Maß verringert werden, weil mit der Beschränkung der lichten Weite w des Ringraums 4 eine entsprechende Strömungsgeschwindigkeit des Fluids im Ringraum 4 vorgegeben und damit die Verweilzeit des Fluids im Ringraum 4 begrenzt werden kann.

Durch die Abhängigkeit des Innendurchmessers D des Hüllrohrs 3 und damit der lichten Weite w des Ringraums 4 vom Außendurchmesser d des Schutzrohrs 2 wird außerdem die jeweilige Leistung des UV-Strahlers 1 berücksichtigt. Mit zunehmender Leistung wird nämlich der Außendurchmesser d des Schutzrohrs 2 größer.

Entspricht beispielsweise der Innendurchmesser D des Hüllrohrs 3 dem 1,1-Fachen des Außendurchmessers d des Schutzrohrs 2, so ergibt sich bei einem Außendurchmesser d des Schutzrohrs 2 von 30 mm eine lichte Weite w des Ringraums 4 von 1,5 mm.

Um vorteilhafte Strömungsbedingungen für das Fluid im Hüllrohr 3 zu erreichen, kann das Schutzrohr 2 auf der Seite des Strömungseinlasses 1 des Hüllrohrs 3 einen Anströmkopf 7 aufweisen, der durch radiale Zentrieransätze 8 zentrisch im Hüllrohr 3 gehalten wird. Durch diesen Anströmkopf 7 ergeben sich vorteilhafte, symmetrische Anströmbedingungen für den Ringraum 4, wie dies durch die Strömungspfeile 9 angedeutet ist.

## Patentansprüche

1. Vorrichtung zur Erzeugung von Ozon aus einem sauerstoffhaltigen Fluid mit einem in einem Schutzrohr (2) angeordneten UV-Strahler (1) für zwei Hauptwellenlängen von 185 nm und 254 nm, mit einem Hüllrohr (3), das das Schutzrohr (2) unter Ausbildung eines einen Strömungsweg für das sauerstoffhaltige Fluid bildenden Ringraums (4) koaxial umschließt und in Strömungsrichtung vor und hinter dem Schutzrohr (2) einerseits einen Strömungseinlass (5) und anderseits einen Strömungsauslass (6) aufweist, **dadurch gekennzeichnet, dass** der Innendurchmesser (D) des Hüllrohrs (3) höchstens dem 1,2-Fachen des Außendurchmessers (d) des Schutzrohrs (2) entspricht und dass das Schutzrohr (2) mit einem Inertgas gefüllt ist.

2. Vorrichtung nach Anspruch 1, **dadurch gekennzeichnet, dass** der Innendurchmesser (D) des Hüllrohrs (3) höchstens dem 1,1-Fachen des Außendurchmessers (d) des Schutzrohrs (2) entspricht.

3. Vorrichtung nach Anspruch 1 oder 2, **dadurch gekennzeichnet, dass** das Hüllrohr (3) Strahlung der Wellenlänge 185 nm absorbiert.

4. Vorrichtung nach einem der Ansprüche 1 bis 3, **dadurch gekennzeichnet, dass** das Schutzrohr (2) auf der Seite des Strömungseinlasses (5) einen durch radiale Zentrieransätze (8) zentrisch im Hüllrohr (3) gehaltenen Anströmkopf (7) aufweist.
